Europäisches Patentamt

(19) European Patent Office

Office européen des brevets

(11) Numéro de publication: **0 132 167**
**B1**

## (12) FASCICULE DE BREVET EUROPÉEN

(45) Date de publication du fascicule du brevet:
**10.08.88**

(21) Numéro de dépôt: **84401195.7**

(22) Date de dépôt: **13.06.84**

(51) Int. Cl.⁴: **G 01 F 25/00,** G 01 F 1/10

(54) Circuit de contrôle de l'état de fonctionnement d'un compteur de fluide.

(30) Priorité: **17.06.83 FR 8310016**

(43) Date de publication de la demande:
**23.01.85 Bulletin 85/4**

(45) Mention de la délivrance du brevet:
**10.08.88 Bulletin 88/32**

(84) Etats contractants désignés:
**DE GB IT NL**

(56) Documents cité:
**DE-A-1 944 219**
**DE-B-1 648 124**
**US-A-3 820 395**
**US-A-3 934 473**

(73) Titulaire: **SCHLUMBERGER INDUSTRIES, 50,
avenue Jean Jaurès, F-92120 Montrouge (FR)**

(72) Inventeur: **Butin, Gilles, 21 Boulevard Jean Jaurès,
F-92110 Clichy (FR)**

(74) Mandataire: **Dronne, Guy, SCHLUMBERGER
INDUSTRIES Centre de Recherches/SMR BP 620-
05, F-92542 Montrouge Cédex (FR)**

EP 0 132 167 B1

LIBER, STOCKHOLM 1988

# 0 132 167

## Description

La présente invention a pour objet un circuit de contrôle de l'état de fonctionnement d'un compteur de fluide. De façon plus précise, l'invention se rapporte à un circuit qui permet de contrôler si un compteur notamment de débit de gaz ou de liquide est dans un état correct de fonctionnement, c'est-à-dire si le compteur est susceptible de fournir une mesure correspondant effectivement au débit auquel il est soumis.

L'invention s'applique notamment à un compteur à turbine. Dans cette application le circuit permet de vérifier que la turbine comporte effectivement toutes ses pales.

L'invention peut s'appliquer également à un compteur à tourbillons. Ces compteurs sont maintenant bien connus et on pourra se référer par exemple au brevet américain 4.171.643 pour en avoir un mode détaillé de réalisation. En résumé le comptage consiste à placer dans une canalisation un obstacle derrière lequel se forme des tourbillons avec une fréquence qui est proportionnelle à la vitesse d'écoulement du fluide. La fréquence de formation de ces tourbillons est mesurée à l'aide d'un capteur de pression différentielle ou d'un capteur de vibration qui délivre ainsi un signal dont la fréquence est représentative de la vitesse du fluide. Cependant le fonctionnement d'un tel compteur peut être délicat en particulier pour les petites valeurs du nombre de Reynolds et il est donc très souhaitable d'avoir un moyen pour contrôler qu'il est effectivement en état de fournir une mesure représentative de la vitesse d'écoulement du fluide.

On connait par le brevet DE-B-1648124 un dispositif pour le contrôle du fonctionnement de compteur de fluide à turbine comprenant deux compteurs disposés dans le flux de fluide et reliée chacun à des moyens pour recevoir un signal impulsionnel représentatif du fonctionnement de chaque compteur, et des moyens d'alarme susceptibles d'engendrer un signal d'alarme en fonction de la comparaison entre les signaux issus des deux compteurs, lesdits signaux impulsionnels étant les signaux délivrés par un détecteur délivrant une impulsion à chaque passage d'une pale de la turbine du compteur.

Par ailleurs, le brevet US-A-3820395 divulgue une technique de mesure débit de fluide par la mesure de l'intervalle de temps séparant le passage de deux pales successives engendrant chacune une impulsion séparée.

Néanmoins, ces dispositifs sont relativement complexes (du fait de l'utilisation de deux compteurs) et donc peu fiables, et ils ne permettent pas d'éliminer les erreurs dues aux légers défauts du compteur.

L'invention a pour objet de fournir un disposition d'une part relativement simple qui permette de détecter de façon très fiable un défaut d'état de fonctionnement du compteur, et d'autre part qui ne soit pas ou peu sensible à de faibles fluctuations du signal dûes à de légères défectuosités du compteur non susceptibles d'entraîner une erreur de mesure significative.

A cette fin, le dispositif comportant les caractéristiques techniques énoncées dans la revendication 1 comprend des moyens pour élaborer une valeur représentative de l'intervalle de temps $t_n$ entre une impulsion de rang N du signal délivré par le compteur et l'impulsion de rang N + 1, des moyens pour élaborer une grandeur représentative d'un intervalle de temps $t'_n$ de comparaison qui vaut $t_n (1 + \alpha)$ avec $\alpha$ fixe compris entre 0 et 1, des moyens pour comparer l'intervalle de temps $t_{n+1}$ entre les impulsions de rangs N + 1 et N + 2 à l'intervalle de temps de comparaison $t'_n$ et des moyens pour élaborer un signal d'alarme si l'intervalle de temps $t_{n+1}$ est supérieur à $t'_n$.

On comprend qu'ainsi on élabore cycliquement tout d'abord un intervalle de temps $t_n$ correspondant au temps s'écoulant entre deux impulsions successives du signal délivré par le compteur. A partir de cet intervalle de temps $t_n$, on élabore un intervalle de temps de comparaison $t'_n$ qui est inférieur à deux fois l'intervalle de temps $t_n$ et on compare l'intervalle de temps $t_{n+1}$ entre les deux impulsions suivantes du signal délivré par le compteur à l'intervalle de comparaison élaboré précédemment. Si l'intervalle de temps entre les deux impulsions successives suivantes est supérieur à l'intervalle de temps de comparaison c'est que l'état de fonctionnement du compteur est défectueux.

L'invention concerne également l'application du dispositif décrit ci-dessus d'une part au contrôle du fonctionnement d'un compteur à turbine, dans lequel ledit signal (HF) est le signal délivré par un détecteur délivrant une impulsion à chaque fois qu'une pale de ladite turbine passe devant ledit détecteur, et d'autre part au contrôle du fonctionnement d'un compteur à tourbillons, dans lequel ledit signal (HF) est le signal délivré par le détecteur de pression différentielle ou de vibration associé audit compteur.

D'autres caractéristiques et avantages de l'invention apparaîtront plus clairement à la lecture de la description qui suit d'un mode de réalisation de l'invention donné à titre d'exemple non limitatif. La description se réfère au dessin annexé sur lequel:

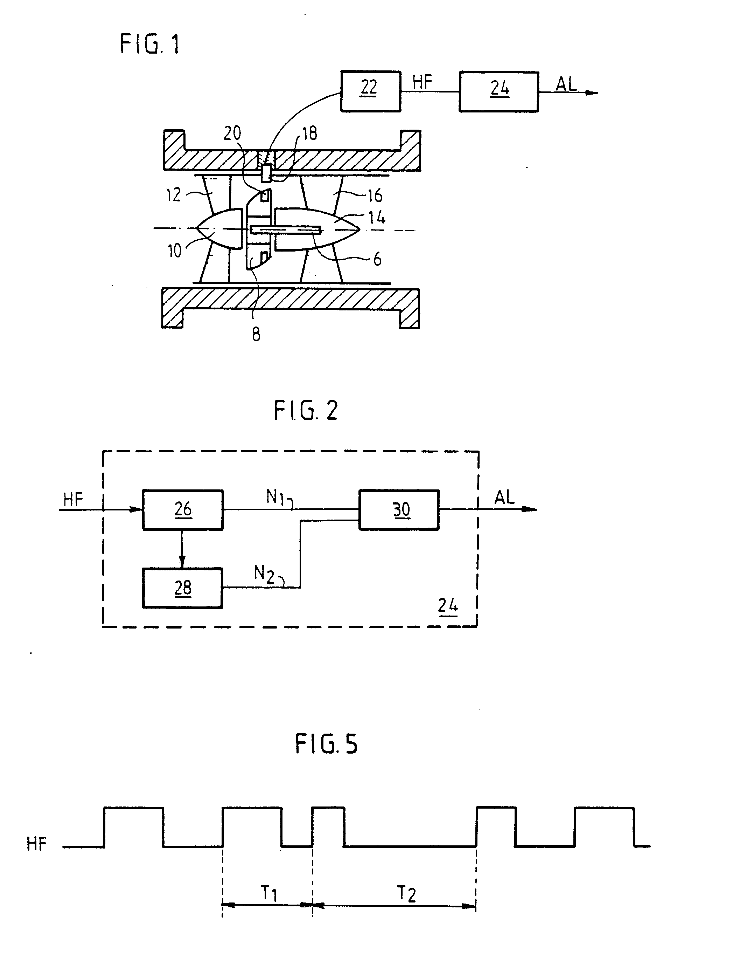

- le figure 1 est une vue simplifiée du dispositif de contrôle appliqué au cas d'un compteur à turbine;
- la figure 2 est un schéma simplifié du circuit de contrôle selon l'invention;
- la figure 3 est un schéma détaillé du circuit de contrôle de la figure 2 selon un mode préféré de réalisation;
- les graphiques de la figure 4 illustrent le fonctionnement du circuit de contrôle de la figure 3; et
- la figure 5 montre le signal délivré par le compteur dans le cas où il y a un "bruit de phase".

La figure 1 illustre l'application du dispositif au cas d'un compteur à turbine. Sur cette figure on a présenté le compteur proprement dit qui est placé à l'intérieur d'une conduite 2 dans laquelle circule le fluide dont on veut mesurer la vitesse. Le compteur comprend essentiellement une turbine 4 montée sur un arbre 6 et pourvue de pales 8. Le compteur comporte également une ogive d'entrée 10 associée à des ailettes fixes 12 et une ogive aval 14 associée à des ailettes fixes 16. L'arbre 6 de la turbine est cinématiquement relié par l'intermédiaire d'un réducteur à un mécanisme de comptage. Cette partie du compteur n'a pas été représentée. Pour effectuer

2

la détection d'une absence de pale de la turbine on utilise par exemple un détecteur inductif 18 fixe qui est disposé à proximité immédiate du passage des pales 8. Par exemple, le détecteur est situé à une distance de l'ordre de 5 à 6 dixièmes de millimètre de celles-ci. Dans le cas où les pales 8 sont réalisées en métal le détecteur 18 délivre directement un signal à chaque fois qu'une pale passe devant lui. Dans le cas où les pales sont réalisées en matière plastique, il est nécessaire de prévoir à l'extrémité de chaque pale une pièce métallique insérée 20. Le signal délivré par le capteur 18 est mis en forme dans le circuit 22 pour delivrer un signal de référence HF qui présente une impulsion à chaque fois qu'une pale de la turbine passe devant le détecteur 18. Ce signal HF est appliqué à l'entrée d'un circuit de contrôle 24 qui délivre à son tour un signal d'alarme AL lorsqu'une pale est absente.

La figure 2 donne un mode général de réalisation du circuit de contrôle de la figure 1. Le circuit 24 comprend un premier ensemble 26 pour élaborer une grandeur $N_1$ représentative de l'intervalle de temps séparant deux impulsions successives du signal HF. On appellera $t_n$ l'intervalle de temps séparant les impulsions de rang N et N + 1. La grandeur $N_1$ est appliquée au circuit 28 pour élaborer une grandeur $N_2$ représentative d'un intervalle de temps de comparaison $t'_n$ avec $t'_n = t_n (1 + \alpha)$ avec $\alpha$ donné compris entre 0 et 1. Puis le circuit 26 élabore une nouvelle valeur de $N_1$ représentative de l'intervalle de temps $t_{n+1}$ qui sépare les impulsions de rangs N + 1 et N + 2. Le circuit de comparaison 30 compare cette nouvelle valeur de $N_1$ à la valeur de comparaison $N_2$. Si $N_1$ est superieur à $N_2$ celà signifie que le compteur est dans un état convenable de fonctionnement. Si $N_1$ est inférieur à $N_2$ le circuit de comparaison 30 délivre un signal d'alarme AL. Bien entendu, pendant cette comparaison, le circuit 26 élabore une nouvelle valeur de comparaison $N_2$ associée à la nouvelle valeur de $N_1$ et correspondant à $t'_{n+1} = t_{n+1} (1 + \alpha)$. Le circuit 28 doit donc comporter également une fonction mémoire pour mémoriser la valeur de $N_2$ associée à $t'_n$ pendant que le circuit 26 élabore la valeur $N_1$ associee à $t_{n+1}$.

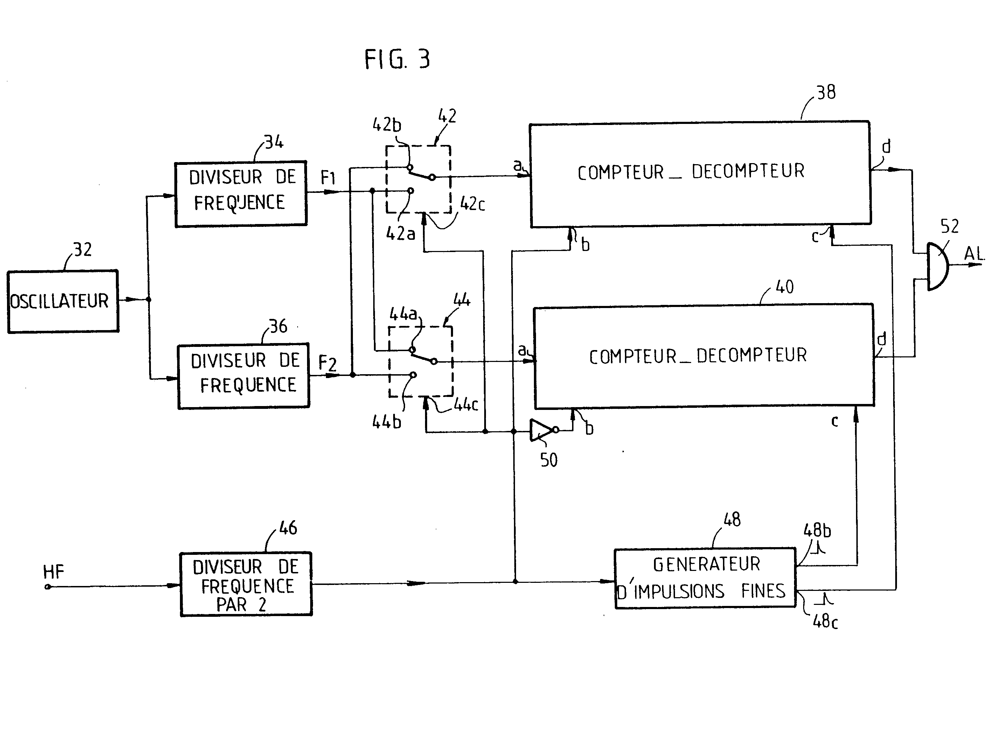

En se référant maintenant à la figure 3 on va décrire plus en détail un mode préféré de réalisation du circuit de contrôle. Ce circuit comprend un oscillateur local 32 qui délivre un signal de fréquence fixe par exemple égal à 500 kHz. Le signal délivré par l'oscillateur 32 est introduit à l'entrée des diviseurs de fréquence 34 et 36 qui divisent par exemple la fréquence du signal d'entrée respectivement par 7 et par 10. Le diviseur 34 délivre un signal de fréquence $F_1$ qui vaut, dans l'exemple considéré, 71 kHz et le diviseur 36 un signal de fréquence $F_2$ qui vaut 50 kHz. Plus généralement, on a $F_2 < F_1$ avec $F_1 = F_2 (1+\alpha)$, $\alpha$ ayant déjà été défini. Bien entendu, les fréquences $F_1$ et $F_2$ ont des valeurs très supérieures à celle de la fréquence du signal HF délivré par le compteur. Le circuit comprend également un premier compteur 38 fonctionnant en compteur-décompteur et un deuxième compteur 40 fonctionnant également en compteur-décompteur. Chaque compteur comporte une entrée d'horloge a et une entrée b de commande de comptage/décomptage. Chaque compteur comprend également une entrée de commande de mise à zéro c et une sortie de dépassement d.

La sortie du diviseur 34 est reliée à une borne 42a d'un premier commutateur 42 dont la sortie est reliée à l'entrée a du compteur 38. La sortie du diviseur 34 est également reliée à la borne d'entrée 44a d'un deuxième commutateur 44 dont la sortie est reliée à l'entrée d'horloge a du compteur 40. Symétriquement la sortie du diviseur 36 est reliée à la borne 42b du commutateur 42 et à la borne 44b du commutateur 44.

Le circuit comporte également un diviseur de fréquence par 2 référencé 46 qui reçoit sur son entrée le signal HF c'est-à-dire le signal délivré par le compteur. La sortie du diviseur 46 est reliée à l'entrée d'un générateur d'impulsions 48. Ce générateur délivre sur sa sortie 48b une impulsion de durée brève pour chaque front descendant du signal appliqué à son entrée, alors que sa sortie 48c délivre un signal de durée brève pour chaque front montant du signal appliqué à son entrée. La sortie 48b du générateur 48 est reliée à l'entrée de remise à zéro c du compteur 40 tandis que la sortie 48c du générateur 48 est reliée à l'entrée de remise à zéro c du compteur 38. Le signal délivré par le diviseur 46 est également appliqué aux entrées de commande 44c et 42c des commutateurs 44 et 42 et également à l'entrée b de commande de sens de comptage du compteur 38. Ce signal est enfin appliqué à l'entrée b de sens de comptage du compteur 40 par l'intermédiaire de l'inverseur 50. Les sorties de dépassement d des compteurs 38 et 40 sont respectivement appliquées aux deux entrées d'une porte OU 52 dont la sortie délivre, s'il y a lieu, le signal d'alarme AL.

Lorsque le signal délivré par le circuit 46 est au niveau logique 0, le compteur 38 compte et le compteur 40 décompte. En outre, pour ce même niveau logique du signal délivré par le diviseur 46, l'entrée 42b du commutateur 42 est reliée à l'entrée a du compteur 38 et l'entrée 44a du commutateur 44 est relié à l'entrée a du compteur 40. Pour le niveau logique 1 de ce même signal on a bien sûr les situations inverses.

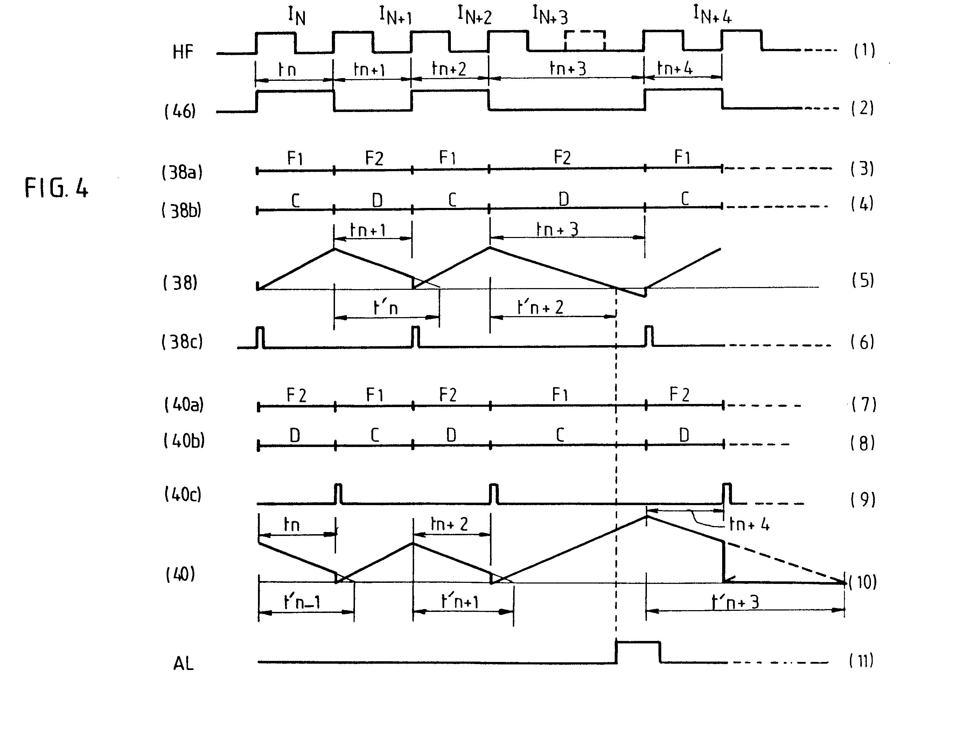

En se référant aux diagrammes de la figure 4 on va expliquer le fonctionnement du circuit de la figure 3. Les diagrammes 1 et 2 représentent respectivement le signal HF et le signal de synchronisation délivré par le diviseur 46. Si l'on s'intéresse uniquement au compteur 36 on voit que pendant le temps $t_n$ séparant les impulsions consécutives $I_N$ et $I_{N+1}$ du signal HF le compteur 38 compte les impulsions du signal $F_1$. A la fin de cet intervalle de temps du contenu du compteur 36 (diagramme 5) est donc représentatif de l'intervalle de temps $t_n$, puis le compteur 36 décompte les impulsions du signal de fréquence $F_2$. Pour que le compteur 38 revienne à zéro, il faudrait qu'il s'écoule le temps $t'_n = (F_1/F_2)t_n = (1+\alpha) t_n$. Pendant l'intervalle de temps $t_{n+1}$ qui sépare les impulsions $I_{N+1}$ et $I_{N+2}$ le compteur 38 décompte effectivement les impulsions du signal de fréquence $F_2$ dont la fréquence est inférieur à $F_1$. A la fin de cet intervalle de temps, si le contenu du compteur est positif, celà signifie que l'intervalle de temps $t_{n+1}$ est inférieur à $t'_n$.

Celà implique que l'impulsion $I_{N+1}$ est présente. Il n'y a pas de signal d'alarme. Le diagramme (5) montre qu'en revanche il manque une impulsion entre les impulsions référencées $I_{N+3}$ et $I_{N+4}$ puisque $t'_{n+2}$ est inférieure à $t_{n+3}$. En effet, à la fin de l'intervalle de temps $t_{n+3}$ le contenu du compteur 38 est négatif. La mesure est répétée pour les impulsions suivantes.

On comprend cependant qu'avec le seul compteur 38 il n'est possible de détecter une absence d'impulsions que si elle se produit durant la phase de décomptage, c'est-à-dire pendant la deuxième partie du cycle de détection. C'est pourquoi le circuit complet comprend également un compteur 40 qui fonctionne exactement de la même manière mais décalé d'un demi-cycle, c'est-à-dire que pendant que le compteur 38 compte les impulsions de fréquence $F_1$, le compteur 40 décompte les impulsions de fréquence $F_2$. C'est ce qui est résumé par les diagrammes de la figure 4.

La figure 4 montre en outre que le compteur 38 sert à élaborer les intervalles de temps $t_n$ de comparaison de la forme $t'_{2i}$ pour les comparer aux intervalles de temps $t_n$ de la forme $t_{2i+1}$, alors que le compteur 40 sert à élaborer les intervalles de temps de comparaison de la forme $t'_{2i+1}$ pour les comparer aux intervalles de temps de la forme $t_{2i+2}$. Ainsi, que l'impulsion manquante soit de rang "pair" ou "impair", son absence est détectée par l'un ou l'autre des compteurs.

Pour simplifier la structure du circuit qui vient d'être décrit, il est intéressant de prévoir, qu'en fait, lorsqu'un signal est appliqué sur l'entrée de remise à zéro c des compteurs 38 ou 40, le compteur correspondant est chargé à la valeur un. Ainsi le contenu d'un compteur ne pourra être égal à zéro que si $t_{n+1}$ est supérieur à $t'_n$. Pour détecter cette situation, il suffit de placer à la sortie d de chaque compteur un détecteur de zéro, qui émet un signal à chaque fois que le compteur passe par zéro. Ce signal est ensuite appliqué à la porte OU 52. Compte tenu du fait que les signaux appliqués à l'entrée des compteurs ont une fréquence relativement élevée (de l'ordre de 50 kHz), le fait de remettre à la valeur un les compteurs et non à la valeur zéro, ne modifie pas de façon significative la précision de la détection.

Dans la description précédente, on a considéré que l'intervalle de temps séparant deux impulsions successives du signal HF était constant sauf bien sûr si une impulsion manquait. En fait, pour un certain nombre de raisons, il peut y avoir dans le signal un bruit de phase. C'est-à-dire que le signal HF, en l'absence de défauts, n'est pas nécessairement parfaitement périodique. Celà peut être dû à un faux rond de la turbine qui module l'entrefer entre les pales de la turbine et le détecteur et modifie donc l'instant de déclenchement. Il peut également y avoir des phénomènes de relaxation dans les trains d'engrenage des totalisateurs mécaniques associés au compteur à turbine. Dans le cas de compteurs à tourbillons, le phénomène physique capté est de nature erratique. Quelle qu'en soit la cause, la figure 5 illustre un tel signal. On voit par exemple qu'entre les impulsions $I_N$ et $I_{N+1}$ on trouve l'intervalle de temps $T_1$, alors qu'entre les impulsions suivantes $I_{N+1}$ et $I_{N+2}$ on trouve un intervalle de temps $T_2$. Cependant, il n'y a pas d'impulsion manquante. On va montrer qu'il est possible de choisir un rapport entre les fréquences $F_1$ et $F_2$ pour s'affranchir au maximum de ce bruit de phase que l'on peut appeler également taux de gigue.

On comprend que pour tenir compte de la gigue, il y a deux écueils à éviter:

a) d'une part, dans le cas où il n'y a pas d'impulsion manquante mais où, en raison de la gigue, $T_1$ est nettement inférieur à $T_2$, il y a un risque d'alarme intempestive;

b) d'autre part, dans le cas où une impulsion est manquante mais où également $T_1$ est allongé et $T_2$ diminué par la gigue on risque de ne pas détecter l'absence de l'impulsion.

On pose $F_1 = k F_2$ avec $k > 1$.

Le résidu R dans le compteur à la fin d'un cycle de comptage est donné par:

$$R = F_2 (k T_1 - T_2)$$

Dans le premier cas envisagé on pose:

$$T_1 \text{ minimum} = T (1 - g)$$

$$T_2 \text{ maximum} = T (1 + g)$$

expressions dans lesquelles T est la valeur moyenne des intervalles entre deux impulsions successives et g le coefficient de gigue. Le résidu dans le compteur est alors donné par l'expression:

$$R = F_2 T [k(1 - g) - (1 + g)]$$

Pour ne pas donner d'alarme intempestive, le résidu R doit être positif. Celà impose: $k > (1 + g)/(1 - g)$ (1).

Dans le deuxième cas, on peut poser:

$$T_1 \text{ maximum} = T (1 + g)$$

$$T_2 \text{ double du minimum} = 2 T (1 - g)$$

Pour que l'impulsion manquante soit effectivement détectée, il faut que le résidu R soit négatif, ce qui impose: $k < 2 (1 - g)/(1 + g)$ (2).

Si l'on impose de plus que g soit aussi grand que possible afin que le circuit fonctionne dans la plage la plus

4

étendue possible, la résolution des deux inéquations (1) et (2) donne:

g - 3 - 2 $\sqrt{2}$ soit g = 17 % et k = $\sqrt{2}$.

Si l'on revient aux notations initiales, celà signifie donc que $\alpha$ est choisi de préférence égal à $\sqrt{2}$ - 1.

Dans le cas d'un compteur à tourbillons, le signal HF est constitué par le signal de mesure délivré par le capteur de pression ou de vibration et mis en forme.

Il résulte de la description précédente que le dispositif selon l'invention permet effectivement de détecter un défaut d'état de fonctionnement d'un compteur de fluide que celui-ci soit du type à turbine, le défaut consistant dans l'absence d'une pale, ou que le compteur soit à tourbillon, le défaut résultant d'un mauvais réglage ou fonctionnement du compteur. Le circuit est simple. Il permet de plus, en choisissant une valeur convenable du rapport entre les fréquences F1 et F2 de s'affranchir d'un taux de gigue non négligeable sans pour celà altérer la qualité de la détection d'une absence d'impulsion c'est-à-dire d'un mauvais état de fonctionnement du compteur.

Enfin dans le cas d'un comteur à tourbillons le circuit de détection permet d'éviter de doubler le circuit électronique de mesure. En effet, dàs qu'il y a une défaillance du circuit de mesure, cette défaillance est indiquée par le circuit de détection selon l'invention.

## Revendications

1. Dispositif de contrôle de l'état de fonctionnement d'un compteur de fluide comprenant des moyens (24) pour recevoir un signal (HF) formé d'impulsions représentatives du fonctionnement dudit compteur, et des moyens d'alarme (30, 52) pour élaborer un signal d'alarme (AL), caractérisé en ce qu'il comporte:
- des moyens (26) pour élaborer des valeurs représentatives des intervalles de temps $t_n$ entre deux impulsions successives dudit signal (HF) de rangs N et N + 1;
- des moyens (28) pour élaborer des grandeurs représentatives d'intervalles de comparaison $t'_n$ avec $t'_n = t_n$ (1 + $\alpha$) dans lequel $\alpha$ est un nombre prédéterminé compris entre 0 et 1;
- des moyens (30) pour comparer d'une part les grandeurs représentatives des intervalles de temps $t_{n+1}$, correspondant aux intervalles de temps entre deux impulsions de rang N+1 et N+2, et d'autre part les intervalles de comparaison $t'_n$;

lesdits moyens d'alarme (30, 52) élaborant un signal d'alarme (AL) si $t_{n+1}$ est supérieur à $t'_n$.

2. Dispositif de contrôle selon la revendication 1, caractérisé en ce qu'il comprend:
- des premiers moyens (32, 34, 36, 38, 42) pour élaborer des valeurs représentatives des intervalles de temps $t_n$, de la forme $t_{2i}$, correspondant à un cycle dit de rang pair, dudit signal (HF), et pour élaborer des intervalles de temps de comparaison de la forme

$t'_{21} = t_{2i-1} (1 + \alpha)$, où $t_{2i-1}$

est

l'intervalle de temps correspondant au cycle précédent, dit de rang impair, dudit signal (HF);
- des deuxièmes moyens (32, 34, 36, 40, 44) pour élaborer des valeurs représentatives des intervalles de temps $t_n$, de la forme $t_{2i+1}$, correspondant au cycle de rang impair suivant ledit cycle de rang pair, et pour élaborer les intervalles de comparaison de la forme $t'_{2i} = t_{2i} (1 + \alpha)$;
- des premiers moyens de comparaison (38) des valeurs $t_{2i}$ et $t'_{2i-1}$ pour élaborer un premier signal de comparaison si $t_{2i} > t'_{2i-1}$;
- des deuxièmes moyens de comparaison (40) des valeurs $t_{2i+1}$ et $t'_{2i}$ pour élaborer un second signal de comparaison si $t_{2i+1} > t'_{2i}$;
- des moyens (52) pour élaborer ledit signal d'alarme (AL) si l'un desdits deux signaux de comparaison est présent.

3. Dispositif selon la revendication 2, caractérisé en ce que lesdits premiers moyens d'élaboration et de comparaison comprennent:
- des moyens (32, 34, 36) pour élaborer un premier signal de fréquence $F_1$ et un deuxième signal de fréquence $F_2$ avec $F_1 = F_2 (1 + \alpha)$;
- des premiers moyens compteurs-décompteurs (38) munis de moyens de commande du sens de comptage, et
- des premiers moyens (42) pour appliquer alternativement auxdits premiers moyens compteurs-décompteurs (38) lesdits premier et deuxième signaux de fréquence;

en ce que lesdits deuxièmes moyens d'élaboration et de comparaison comprennent:
- lesdits moyens (32, 34, 36) pour élaborer lesdits premier et deuxième signaux de fréquence,
- des deuxièmes moyens compteurs-décompteurs (40) munis de moyens de commande du sens de comptage, et des deuxièmes moyens (44) pour appliquer alternativement auxdits deuxièmes moyens compteurs-décompteurs (40) lesdits premier et deuxième signaux de fréquence; et

- en ce que le dispositif comprend en outre des moyens de synchronisation (46, 48, 50) pour appliquer le signal de fréquence $F_1$ auxdits premiers moyens compteurs-décompteurs (38) et pour les faire compter, et pour appliquer le signal de fréquence $F_2$ auxdits deuxièmes moyens compteurs-décompteurs (40) et pour les faire décompter, pendant les intervalles de temps de la forme $t_{2i}$; pour commander les opérations inverses pendant les intervalles de temps de la forme $t_{2i+1}$; et pour commander la remise à zéro desdits premiers et deuxièmes moyens compteurs-décompteurs (38, 40) respectivement à la fin des intervalles de temps $t_{2i+1}$ et $t_{2i}$.

- lesdits moyens compteurs-décompteurs (38, 40) émettant un signal de comparaison lorsque leur contenu passe à zéro.

4. Dispositif de contrôle selon l'une quelconque des revendications 1 à 3, caractérisé en ce que le nombre $\alpha$ est sensiblement égal à $\sqrt{2}-1$.

5. Application du dispositif selon l'une quelconque des revendications 1 à 4 au contrôle du fonctionnement d'un compteur à turbine (4), dans lequel ledit signal (HF) est le signal délivré par un détecteur (18) délivrant une impulsion à chaque fois qu'une pale (8) de ladite turbine passe devant ledit détecteur.

6. Application du dispositif selon l'une quelconque des revendications 1 à 4 au contrôle du fonctionnement d'un compteur à tourbillons, dans lequel ledit signal (HF) est le signal délivré par le détecteur de pression différentielle ou de vibration associé audit compteur.

**Patentansprüche**

1. Funktionszustandsprüfvorrichtung für einen Fluidzähler mit einer Einrichtung (24) zum Empfangen eines Signals (HF), das aus Impulsen besteht, die für die Funktion dieses Zählers repräsentativ sind und Alarmmitteln (30, 52) zum Erzeugen eines Alarmsignals (AL), dadurch gekennzeichnet, daß sie aufweist:
- Mittel (26) zum Erzeugen von Werten, die für die Zeitintervalle $t_n$ repräsentativ sind zwischen zwei aufeinanderfolgenden Impulsen dieses Signals (HF) der Ordnungszahlen N und N+1;
- Mittel (28) zum Erzeugen von Werten, die für die Vergleichsintervalle $t'_n$ mit $t'_n = t_n (1 + \alpha)$ repräsentativ sind, worin $\alpha$ eine vorbestimmte Zahl zwischen 0 und 1 ist;
- Mittel (30) zum Vergleichen, einerseits zwischen den Größen, die für die Zeitintervalle $t_{n+1}$ repräsentativ sind und die den Zeitintervallen zwischen zwei Ordnungsimpulsen N+1 und N+2 entsprechen, und den Vergleichsintervallen $t'_n$, andererseits;
wobei die obengenannten Alarmmittel (30, 52) ein Alarmsignal (AL) erzeugen, wenn $t_{n+1}$ größer als $t'_n$ ist.

2. Prüfvorrichtung nach Anspruch 1, dadurch gekennzeichnet, daß sie aufweist:
- Erste Mittel (32, 34, 36, 38, 42) zum Erzeugen von Werten, die für die Zeitintervalle $t_n$ repräsentativ sind, von der Form $t_{2i}$, die einem als von gerader Ordnungszahl bezeichneten Zyklus des obengenannten Signals (HF) entsprechen und zum Erzeugen von Zeitintervallen zum Vergleich der Form $t'_{2i-1} = t_{2i-1} (1 + \alpha)$, worin $t_{2i-1}$ das Zeitintervall ist, das dem vorausgehenden, als von ungerader Ordnungszahl bezeichneten Zyklus des obengenannten Signals (HF) entspricht;
- Zweite Mittel (32, 34, 36, 40, 44) zum Erzeugen von Werten, die für die Zeitintervalle $t_n$ repräsentativ sind, von der Form $t_{2i+1}$, die dem Zyklus von ungerader Ordnungszahl entsprechen, der dem Zyklus von gerader Ordnungszahl folgt, und zum Erzeugen von Vergleichsintervallen der Form $t'_{2i} = t_{2i} (1+\alpha)$;
- Erste Mittel (38) zum Vergleichen der Werte $t_{2i}$ und $t'_{2i-1}$ zum Erzeugen eines ersten Vergleichssignals, wenn $t_{2i} > t'_{2i-1}$;
- Zweite Mittel (40) zum Vergleichen der Werte $t_{2i+1}$ und $t'_{2i}$, zum Erzeugen eines zweiten Vergleichssignals, wenn $t_{2i+1} > t'_{2i}$;
- Mittel (52) zum Erzeugen des obengenannten Alarmsignals (AL), wenn eines der beiden Vergleichssignale vorhanden ist.

3. Vorrichtung nach Anspruch 2, dadurch gekennzeichnet, daß die ersten Erzeugungs- und Vergleichmittel aufweisen:
- Mittel (32, 34, 36) zum Erzeugen eines ersten Frequenzsignals $F_1$ und eines zweiten Frequenzsignals $F_2$, worin $F_1 = F_2 (1 + \alpha)$;
- Erste Aufwärts/Abwärts-Zählmittel (38), die mit Steuermitteln des Zählsinnes versehen sind und
- Erste Mittel (42), um wählweise das erste bzw. das zweite Frequenzsignal an die ersten Aufwärts/ Abwärts-Zählmittel (38) anzulegen,
daß die zweiten Erzeugungs- und Vergleichmittel aufweisen:
- die obengenannten Mittel (32, 34, 36) zum Erzeugen der obengenannten ersten und zweiten Frequenzsignale;
- zweite Aufwärts/Abwärts-Zählmittel (40), die mit Steuermitteln des Zählsinnes versehen sind, und zweite Mittel (44), um abwechselnd das erste bzw. das zweite Frequenzsignal an die zweiten Aufwärts/Abwärts-Zählmittel (40) anzulegen und
- daß die Vorrichtung ferner Synchronisationsmittel (46, 48, 50) aufweist, um das Frequenzsignal $F_1$ an die obengenannten ersten Aufwärts/Abwärts-Zählmittel (38) anzulegen und um sie zum Aufwärtszählen zu veranlassen und um das Frequenzsignal $F_2$ an die obengenannten zweiten Aufwärts/Abwärts-Zählmittel (40) anzulegen und um sie während der Zeitintervalle der Form $t_{2i}$ zum Abwärtszählen zu veranlassen; um die umgekehrten Zählvorgänge während der Zeitintervalle der Form $t_{2i+1}$ zu steuern; und um die Nullrücksetzung der obengenannten ersten bzw. zweiten Aufwärts/Abwärts-Zählmittel (38, 40) am Ende der Zeitintervalle $t_{2i+1}$ und $t_{2i}$ zu steuern.

- wobei die obengenannten Aufwärts/Abwärts-Zählmittel (38, 40) ein Vergleichssignal abgeben, wenn ihr Inhalt auf Null geht.

4. Prüfvorrichtung nach einem der Ansprüche 1 bis 3, dadurch gekennzeichnet, daß die Zahl im wesentlichen $\sqrt{2}$-1 entspricht.

5. Anwendung der Vorrichtung nach einem der Ansprüche 1 bis 4 auf die Funktionsüberprüfung eines Turbinenzählers (4), worin das obengenannte Signal (HF) das Signal ist, das von einem Detektor (18) abgegeben wird, der jedesmal einen Impuls abgibt, wenn ein Flügel (8) der Turbine vor dem Detektor vorbeiläuft.

6. Anwendung der Vorrichtung nach einem der Ansprüche 1 bis 4 auf die Funktionsüberprüfung eines Wirbelzählers, worin das obengenannte Signal (HF) das Signal ist, das von dem Detektor des Differenzdrucks oder der Vibration abgegeben wird, der dem obengenannten Zähler zugeordnet ist.

## Claims

1. Device for checking the operational state of a fluid meter comprising means (24) for receiving a signal (HF) formed of pulses representing the funtioning of the said meter, and alarm means (30, 52) for producing an alarm signal (AL), characterized in that it includes:

means (26) for producing values representing the time intervals $t_n$ between two successive pulses of the said signal (HF) in positions N and N+1;

means (28) for producing values representing comparison intervals $t'_n$, with $t'_n = t_n (1+\alpha)$ wherein $\alpha$ is a predetermined number between 0 and 1;

means (30) for comparing on the one hand the values representing the time intervals $t_{n+1}$, corresponding to the time intervals between two pulses of positions N+1 and N+2, and, on the other hand, the comparison intervals $t'_n$;

the said alarm means (30, 52) producing an alarm signal (AL) if $t_{n+1}$ is greater than $t'_n$.

2. Checking device according to Claim 1, characterized in that it includes:

first means (32, 34, 36, 38, 42) for producing values representing the time intervals $t_n$, of the form $t_{2i}$, corresponding to a so-called even cycle of the said signal (HF), and for producing comparison time intervals of the form $t'_{2i-1} = t_{2i-1} (1 + \alpha)$, where

$t_{2i-1}$ is the time interval corresponding to the previous so-called odd cycle of the said signal (HF);

second means (32, 34, 36, 40, 44) for producing values representing the time intervals $t_n$, of the form $t_{2i+1}$, corresponding to the odd cycle following the said even cycle, and for producing the comparison intervals of the form $t'_{2i} = t_{2i} (1 + \alpha)$;

first means of comparison (38) of the values $t_{2i}$ and $t'_{2i-1}$ in order to produce a first comparison signal if $t_{2i} >$ than $t'_{2i-1}$;

second means of comparison (40) of the values $t_{2i+1}$ and $t'_{2i}$ in order to produce a second comparison signal if $t_{2i+1} > t'_{2i}$;

means (52) for producing the said alarm signal (AL) if one of the said two comparison signals is present.

3. Device according to Claim 2, characterized in that the said first means of producing and of comparison comprise:

means (32, 34, 36) for producing a first signal of frequency $F_1$ and a second signal of frequency $F_2$ with $F_1 = F_2 (1 + \alpha)$;

first count-up/count-down means (38) provided with means of control of the direction of counting, and first means (42) for applying alternately to the said first count-up/count-down means (38) the said first and second frequency signals;

in that the said second means for producing and comparing comprise:

the said means (32, 34, 36) for producing the said first and second frequency signals,

second count-up/count-down means (40) provided with means of control of the direction of counting, and second means (44) for alternately applying to the said countup/count-down means (40) the said first and second frequency signals; and

in that the said device also includes means of synchronization (46, 48, 50) for applying the signal of frequency $F_1$ to the said first count-up/count-down means (38) and for making them count, and for applying the signal of frequency $F_2$ to the said second count-up/count-down means (40) and for making them count, during the time intervals of the form $t_{2i}$; for controlling the inverse operations during the time intervals of the form $t_{2i+1}$; and for controlling the reset to zero of the said first and second count-up/count-down means (38, 40) respectively at the end of the time intervals $t_{2i+1}$ and $t_{2i}$.

- the said count-up/count-down means (38, 40) producing a comparison signal when their content goes to zero.

4. Checking device according to any of Claims to 3, characterized in that the number $\alpha$ is substantially equal to $\sqrt{2}$-1.

5. Application of the device according to any of Claims 1 to 4 to the checking of the operation of a turbine

7

meter (4), in which the said signal (HF) is the signal delivered by a detector (18) delivering a pulse each time that a blade (8) of the said turbine passes in front of the said detector.

6. Application of the device according to any of Claims 1 to 4 to the checking of the operation of a vortex meter, in which the said signal (HF) is the signal delivered by the differential pressure detector or the vibration detector associated with the said meter.

FIG. 1

FIG. 2

FIG. 5

FIG. 3

FIG. 4